# EUROPEAN PATENT SPECIFICATION

(11) **EP 2 220 942 B1**
(45) Date of publication and mention of the grant of the patent: **04.04.2018**
(21) Application number: 10152288.6
(22) Date of filing: 01.02.2010
(51) Int. Cl.: A22C 11/08, F04C 2/344, F04C 13/00, F04C 2/356, F01C 21/08

(54) **Rotary filling pump with auxiliary cam**
Drehfüllpumpe mit Hilfsnocke
Pompe de remplissage rotatif dotée d'une came auxiliaire

(30) Priority: 24.02.2009 IT MI20090055 U
(43) Date of publication of application: 25.08.2010
(73) Proprietor: Righele, Giovanni Battista, 36010 Zane (VI) (IT)
(72) Inventor: Righele, Giovanni Battista, 36010 Zane (VI) (IT)
(74) Representative: Mittler, Enrico

(56) References cited:
- US-A- 3 339 492
- US-A- 3 922 755

## Description

The present invention concerns a rotary filling pump for mincemeat and the like.

A known rotary-type filling pump, shown for example in US-A-3922755, comprises a stator with cylindrical inner cavity, with vertical axis, and a rotor housed revolving in said cylindrical cavity of the stator.

The rotor is formed by joining in a single piece a central cylindrical part with smaller diameter and greater height and a peripheral cylindrical part with bigger diameter and smaller height, both with vertical axis.

A top cover closes the stator with the rotor inside.

A feed window is obtained on the top cover and to this can be connected a hopper for feeding the mincemeat.

The rotor, the stator and the top cover define an upper annular chamber, while the rotor and the bottom of the stator define a lower annular chamber. The mincemeat enters, transits through and exits from the upper annular chamber through an outlet window generally placed radial to the inlet and connected to a filling cone onto which is fitted a natural or synthetic gut that receives the mincemeat.

In the peripheral part of the rotor are full-height radial grooves housing blades, typically with rectangular section, sliding in axial direction, i.e., vertical, in the grooves.

The lower chamber, not involved in the flow of mincemeat, permits the axial movement of the blades, as described later on.

The purpose of the blades, which are caused to rotate around the vertical axis of the rotor, is to pump and divide up the mincemeat from the inlet to the outlet and for this purpose they must occupy the upper annular chamber during rotation, accompanying the mincemeat towards the gut placed on the outlet. Immediately after the outlet, in the pumping direction, there is also a partition panel or a part projecting downwards in a single piece with the upper cover. The purpose of the panel is to deviate the movement of the meat towards the outlet window.

The blades must therefore drop when they come to the panel occupying the space in the lower annular chamber. The blades must then lift back up in the upper annular chamber downstream of said panel.

In the known state of the art, the lowering and lifting sequence of the blades is regulated by a lower cam and by an upper cam.

The lower cam is located in the lower annular chamber on the bottom of the stator and has a shape known to experts in the sector. Generally speaking, it is shaped like a ramp as wide as the blades, which is downward moving in the panel area, upward moving immediately after this area and of constant height for the remainder of its length.

An identical upper cam guides the blades, but the shape, it too well known to experts in the sector, is different: it envisages a narrow ramp portion placed in proximity to the central cylindrical part of the rotor, immediately before the mincemeat outlet window.

The configuration of the upper cam creates a problem due to the asymmetric action of the load on the blades in the outlet area. This asymmetric operation produces drawbacks well known to the experts in the sector, such as the formation of harmful play and the deterioration of the blades, in particular if these, which is by now usual, are made of plastic material.

US-A-3922755 discloses the features mentioned in the preamble of claim 1.

US-A-3339492 discloses a rotary fluid unit comprising a first ascending ramp arranged upstream of a dividing wall of the annular pumping cavity and a second descending ramp arranged downstream of the dividing wall. The ascending ramp forces the rotor vanes to move upwardly to pass above the dividing wall, while the descending ramp allows the rotor vanes to move downwardly under a spring force.

Functional purposes have led the owner of the present application to make a change to US-A-3922755 which improves the functionality of the filling pump.

According to the invention, this object is achieved by means of a rotary pump for the continuous filling of mincemeat and the like, which comprises the features recited in claim 1.

These and other characteristics of the present invention will be made clearer from the following detailed description of a practical embodiment thereof illustrated by way of non-limiting example in the attached drawings, in which:

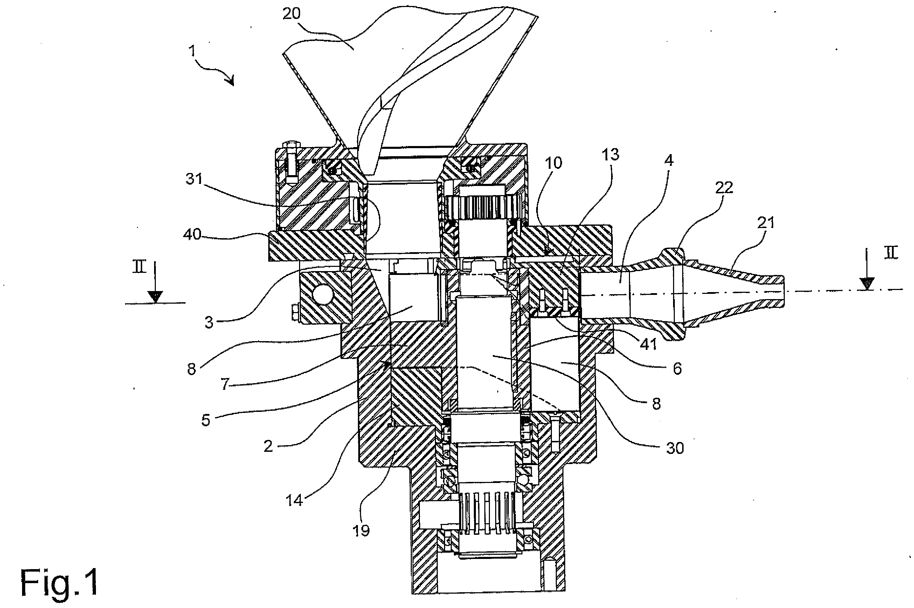

the figure 1 shows a vertical section view of a rotary filling pump according to the invention;
the figure 2 shows said pump in cross section according to the line II-II of figure 1;
the figure 3 shows a partial section view of the pump according to the invention with the blade near to engagement with the auxiliary cam;
the figure 4 shows a similar view to that of the figure 3 with the blade at the summit of the auxiliary cam;

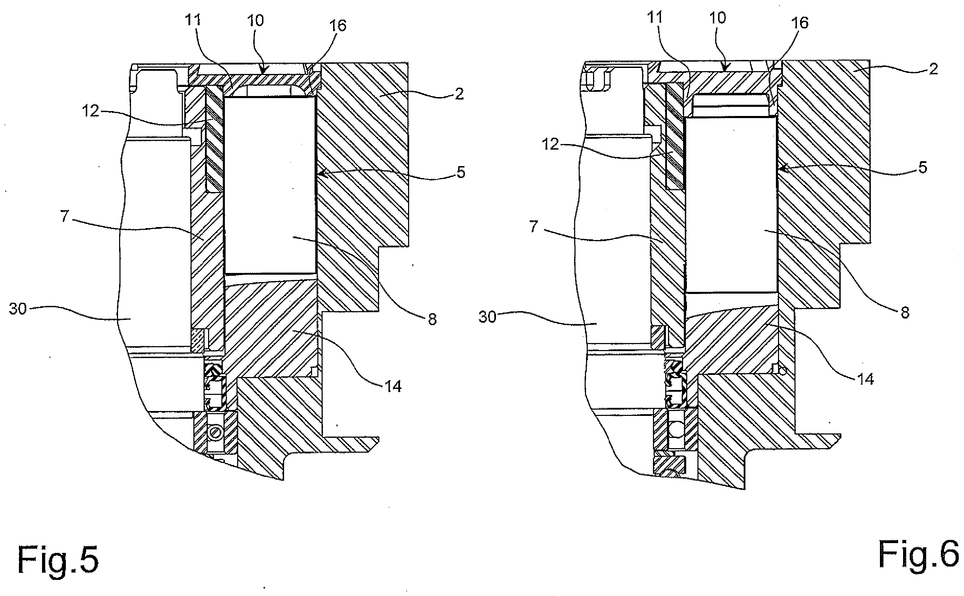

the figure 5 shows a section view according to the line V-V of the figure 3;
the figure 6 shows a section view according to the line VI-VI of the figure 4;

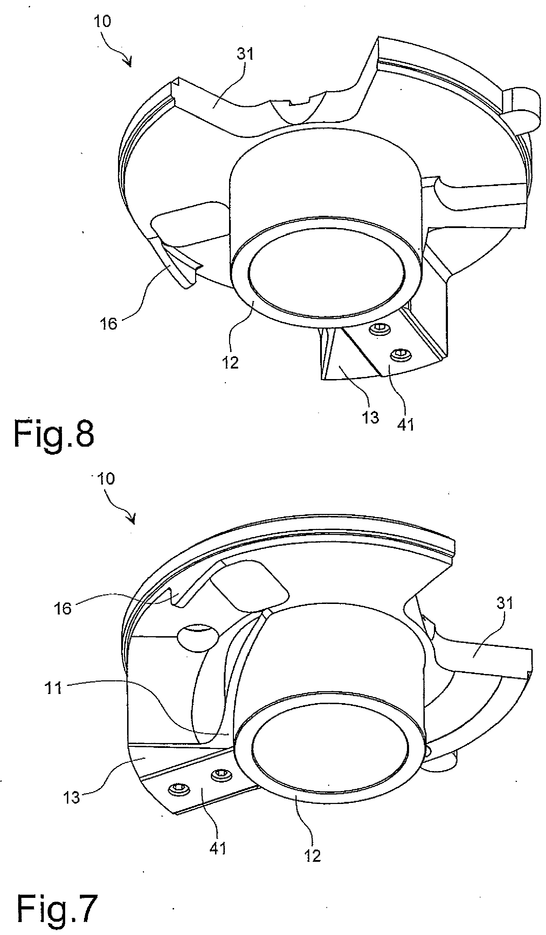

the figure 7 shows a perspective view of the cover of the pump of the preceding illustrations;
the figure 8 shows the figure 7 turned with respect to a vertical axis.

In the attached figures and in particular in the figures from 1 to 4, a rotary pump 1 can be seen for the continuous filling of mincemeat or the like, comprising a stator 2 with a cylindrical cavity inside which is coaxially housed a rotor 5 revolving around its axis. The rotor 5 is made to rotate by the shaft 30 of a motor (not shown).

Said rotor 5 consists of a central cylindrical portion 6, of considerably smaller diameter than that of the stator 2, which extends along the vertical axis, and of a peripheral cylindrical portion 7 of greater diameter, such as to skim with play the said wall of the stator 2, and reduced height with respect to the portion 6.

The cavity of the stator 2 is closed at the top by an upper closing cover or plate 40 which through a hole 31 is suitable for receiving the mincemeat from a hopper 20 and introducing it into the cavity of the stator 2 through a communicating inlet 3.

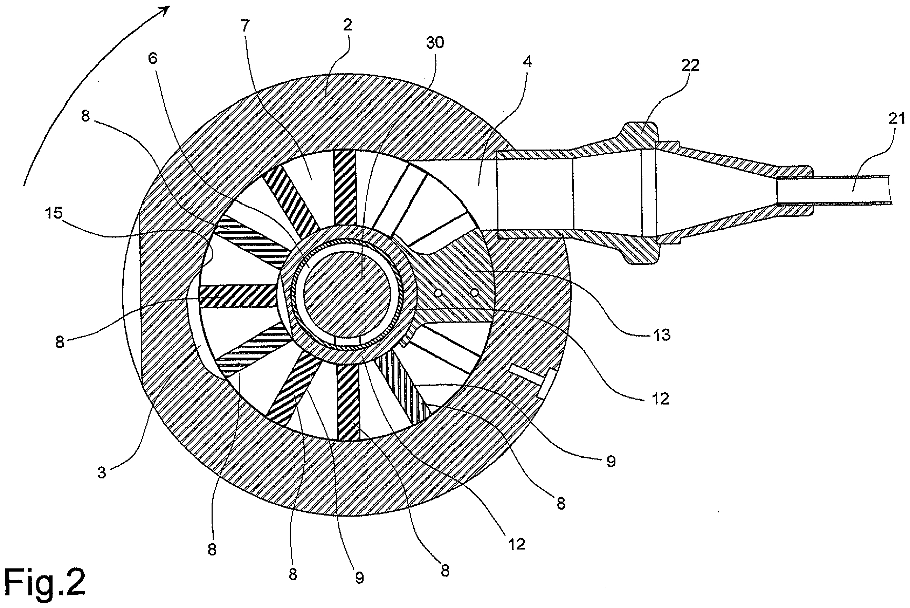

Between the stator 2 and the rotor 5 is defined an upp er annular chamber 15 (figure 2) communicating with the inlet 3 and with an outlet 4 obtained in the side wall of the stator 2, in a position substantially diametrically opposite upstream of a fixed panel 13 equipped with an underlying wear strip 41. The upper annular chamber 15 is involved in the flow of mincemeat coming from the hopper 20 and directed towards the wall 13 and from here into the outlet 4.

In the peripheral portion 7 of the rotor 5 are arranged sliding radial blades 8, substantially with parallelepiped shape, guided to slide in the direction of the rotor axis 5 in grooves 9 according to a preselected program.

The function of the blades 8 is to guide the mincemeat, by means of the rotation produced by the rotor 5 in a suitable direction indicated by the arrow in figure 2, from the inlet 3 to the outlet 4 towards a mouth 22 which introduces the mincemeat into a filling cone 21 onto which is fitted a natural or synthetic gut (not shown), e.g., for making sausages.

The transport of the meat in the upper chamber 15 divided up by the blades 8 into identical compartments moves predefined portions of mincemeat identical the one to the other for the aforementioned purpose.

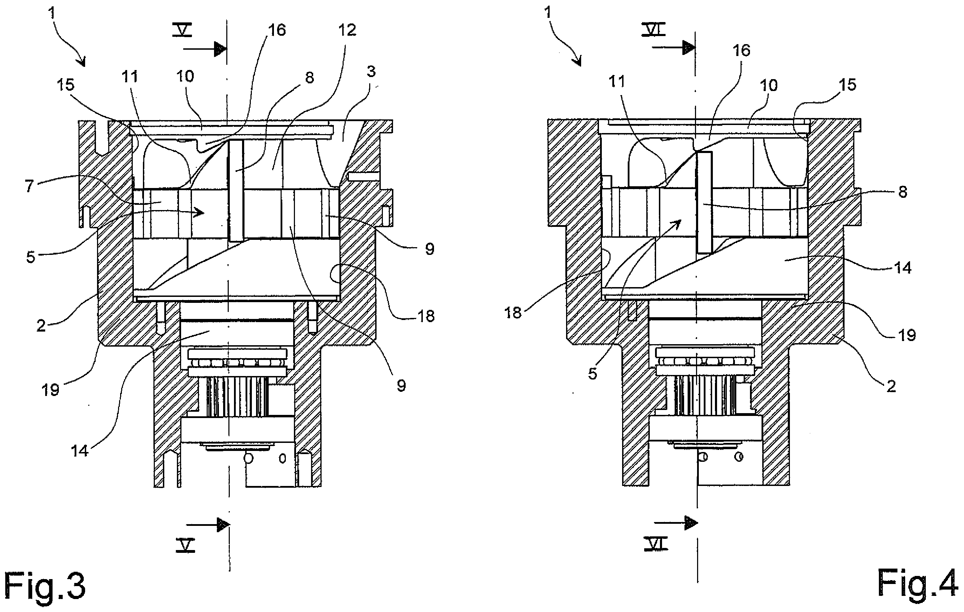

According to said predefined movement program of the blades 8, the blades 8 which during the course of the rotation of the rotor 5 are in an area upstream of the panel 13 are arranged in the upper annular chamber 15 and the blades 8 which during the course of the rotation of the rotor 5 are at the panel 13 are moved downwards into a lower annular chamber 18 (figures 3 and 4) defined between the bottom 19 of the stator 2 and the peripheral portion 7 of the rotor 5; said lower chamber 18 is not involved in the flow of mincemeat and its purpose is to accommodate the portion of blade 8 exiting from the portion 7 of the rotor 5.

The preselected program is enabled by the cooperation of a lower cam 14 and of an upper cam 10 which guide the blades 8 in their axial movement during the rotation of the rotor 5. The blades 8 slide vertically in the grooves 9 and are guided in an axial direction by the cams 14 and 10 so as to avoid the panel 13 in their rotary movement.

The extension of the circumference of the cam 14 is known by the state of the art, and in particular by the patent US-A-3922755. In particular it envisages a descending ramp immediately before the panel 13, an ascending ramp immediately after the above panel and a flat part between the two ramps.

The upper cam 10 (figures from 3 to 8) has a central cylindrical portion 12 positioned around the central portion 6 of the rotor 5 and has adjacent to it a first narrow portion with descending ramp located immediately upstream of the panel 13.

As shown in the figures from 3 to 8, the upper cam 10 also envisages an auxiliary cam 16 made up of a second narrow portion with descending ramp positioned immediately upstream of the panel 13 and in the proximity of the outer side edge of the peripheral portion 7 of the rotor 5 to cooperate with the above first ramp portion 11 of the upper cam 10 and with the lower cam 14 for the correct guidance of the downward movement of the blades.

The introduction of the auxiliary cam 16 has shown itself useful, because it removes the load asymmetry on the blades 8 in the proximity of the outlet 4, eliminating the drawbacks related to play, wear and possible breakages of the blades 8, in particular if these are made of plastic material.

## Claims

1. Rotary pump (1) for the continuous filling with mincemeat and the like, comprising a stator (2) with a cylindrical cavity, a closing cover (10) for the cavity of the stator (2), a rotor (5) coaxially housed inside said stator (2) and revolving around its axis, said rotor (5) being made up of a central cylindrical portion (6) extending along the axis and of a peripheral cylindrical portion (7) of such a height that between said stator (2), said cover (10) and said rotor (5) an upper annular chamber (15) is defined having an inlet (3) and an outlet (4), a fixed partition panel (13) fitted in the upper annular chamber (15) immediately downstream of said outlet (4) with respect to the direction of movement of the rotor (5), in said peripheral portion (7) of the rotor (5) radial blades (8) being slidingly arranged which are guided to slide in the direction of the rotor axis (5) in grooves (9) according to a preselected program according to which the blades (8) which during the course of the rotation of the rotor (5) are upstream of the fixed panel (13) are arranged in raised position in the upper annular chamber (15) and the blades (8) which during the course of the rotation of the rotor (5) are at the fixed panel (13) are moved into a lower annular chamber (18) defined between the bottom (19) of the stator (2) and the peripheral portion (7) of the rotor (5), said preselected program being enabled by a fixed lower cam (14) arranged in said lower annular chamber (18) for supporting a lower edge of the blades (8) and by a fixed upper cam (10) which cooperates with the lower cam (14) and is housed in the upper annular chamber (15) for guiding an upper edge of the blades (8) when in raised position, said upper cam (10) comprising a first narrow portion with descending ramp (11) positioned in proximity of the central cylindrical part (6) of the rotor (5) immediately upstream of said panel (13) to rest on a radially inner portion of the upper edge of the blades (8), **characterised in that** the rotary pump also comprises an auxiliary cam (16) made up of a second narrow portion with descending ramp positioned immediately upstream of said panel (13) in radially outer position with respect to said first descending ramp portion (11) of the upper cam (10) and in proximity of the outer side edge of the peripheral part (7) of the rotor to engage a radially outer portion of the upper edge of the blades (8) and cooperate with said first descending ramp portion (11) of the upper cam (10) for causing a symmetric downward movement of the blades (8) below said panel (13).

2. Pump according to the claim 1, **characterised in that** said first ramp portion (11) of the upper cam (10) is located in a position adjacent to a cylindrical central portion (12) of the upper cam (10) positioned around the central part (6) of the rotor (5).

3. Pump according to the claim 1 or 2, **characterised in that** the auxiliary cam (16) is fastened to the outer side edge of the upper cam (10).

## Patentansprüche

1. Rotationspumpe (1) für das kontinuierliche Füllen mit Gehacktem und ähnlichem, umfassend einen Stator (2) mit einer zylindrischen Aushöhlung, einen Verschlussdeckel (10) für Aushöhlung des Stators (2), einen Rotor (5), der innerhalb des Stators (2) koaxial untergebracht ist und sich um seine Achse dreht, wobei der Rotor (5) zusammengesetzt ist aus einem zentralen zylindrischen Teilbereich (6), der sich entlang der Achse erstreckt, und aus einem peripheren zylindrischen Teilbereich (7) von einer derartigen Höhe, dass zwischen dem Stator (2), dem Deckel (10) und dem Rotor (5) eine obere ringförmige Kammer (15) definiert ist, die einen Einlass (3) und einen Auslass (4) hat, wobei eine feste Trennwand (13) in der oberen ringförmigen Kammer (15) direkt stromab von dem Auslass (4) in Bezug auf die Richtung einer Bewegung des Rotors (5) eingepasst ist, wobei im peripheren Teilbereich (7) des Rotors (5) radiale Schaufeln (8) gleitend angeordnet sind, die geführt werden, um in der Richtung der Rotorachse (5) gemäß einem vorausgewählten Programm in Rillen (9) zu gleiten, gemäß welchem die Schaufeln (8), die während des Verlaufs der Drehung des Rotors (5) stromauf von der festen Wand (13) sind, in einer erhöhten Position in der oberen ringförmigen Kammer (15) angeordnet sind, und die Schaufeln (8), die während des Verlaufs der Drehung des Rotors (5) bei der festen Wand (13) sind, in eine untere ringförmige Kammer (18) bewegt werden, die zwischen dem Boden (19) des Stators (2) und dem peripheren Teilbereich (7) des Rotors (5) definiert ist, wobei das vorausgewählte Programm freigegeben wird durch eine feste untere Nockenscheibe (14), die in der unteren ringförmigen Kammer (18) zum Stützen eines unteren Rands der Schaufeln (8) angeordnet ist, und durch eine feste obere Nockenscheibe (10), die mit der unteren Nockenscheibe (14) zusammenarbeitet und in der oberen ringförmigen Kammer (15) zum Führen eines oberen Rands der Schaufeln (8) untergebracht ist, wenn sie in der erhöhten Position sind, wobei die obere Nockenscheibe (10) einen ersten schmalen Teilbereich mit abfallender Rampe (11) umfasst, der in der Nähe des zentralen zylindrischen Teilbereichs (6) des Rotors (5) direkt stromauf von der Wand (13) positioniert ist, um auf einem radial inneren Teilbereich des oberen Rands der Schaufeln (8) zu ruhen, **dadurch gekennzeichnet, dass** die Rotationspumpe auch eine Hilfsnockenscheibe (16) umfasst, die zusammengesetzt ist aus einem zweiten schmalen Teilbereich mit abfallender Rampe, der direkt stromauf von der Wand (13) in einer radial äußeren Position in Bezug auf den ersten abfallenden Rampenteilbereich (11) der oberen Nockenscheibe (10) und in der Nähe des äußeren Seitenrands des peripheren Teils (7) des Rotors positioniert ist, um mit einem radial äußeren Teilbereich des oberen Teilbereichs der Schaufeln (8) in Eingriff zu sein und mit dem ersten abfallenden Rampenteilbereich (11) der oberen Nockenscheibe (10) zum Veranlassen einer symmetrischen Abwärtsbewegung der Schaufeln (8) unter der Wand (13) zusammenzuarbeiten.

2. Pumpe nach Anspruch 1, **dadurch gekennzeichnet, dass** der erste Rampenteilbereich (11) der oberen Nockenscheibe (10) in einer Position benachbart zu einem zylindrischen zentralen Teilbereich (12) der oberen Nockenscheibe (10) angeordnet ist, der um den zentralen Teil (6) des Rotors (5) positioniert ist.

3. Pumpe nach Anspruch 1 oder 2, **dadurch gekennzeichnet, dass** die Hilfsnockenscheibe (16) am äußeren Seitenrand der oberen Nockenscheibe (10) befestigt ist.

## Revendications

1. Pompe rotative (1) pour le remplissage continu de viande hachée et similaire, comprenant un stator (2) avec une cavité cylindrique, un couvercle de fermeture (10) pour la cavité du stator (2), un rotor (5) logé, de manière coaxiale, à l'intérieur dudit stator (2) et tournant autour de son axe, ledit rotor (5) étant composé d'une partie cylindrique centrale (6) s'étendant le long de l'axe et d'une partie cylindrique périphérique (7) d'une hauteur telle qu'entre ledit stator (2), ledit couvercle (10) et ledit rotor (5), on définit une chambre annulaire supérieure (15), ayant une entrée (3) et une sortie (4), un panneau de séparation fixe (13) monté dans la chambre annulaire supérieure (15) immédiatement en aval de ladite sortie (4) par rapport à la direction de mouvement du rotor (5), dans ladite partie périphérique (7) du rotor (5), on agence des pales radiales (8), de manière coulissante, qui sont guidées pour coulisser dans la direction de l'axe de rotor (5) dans des rainures (9) selon un programme présélectionné selon lequel les pales (8) qui, pendant la durée de la rotation du rotor (5), sont en amont du panneau fixe (13), sont agencées dans une position levée dans la chambre annulaire supérieure (15) et les pales (8) qui, pendant la durée de la rotation du rotor (5), sont au niveau du panneau fixe (13), sont déplacées dans une chambre annulaire inférieure (18) définie entre le fond (19) du stator (2) et la partie périphérique (7) du rotor (5), ledit programme présélectionné étant activé par une came inférieure fixe (14) agencée dans ladite chambre annulaire inférieure (18) pour supporter un bord inférieur des pales (8) et par une came supérieure fixe (10) qui coopère avec la came inférieure (14) et est logée dans la chambre annulaire supérieure (15) pour guider un bord supérieur des pales (8) lorsqu'elles sont dans la position levée, ladite came supérieure (10) comprenant une première partie étroite avec une rampe descendante (11) positionnée à proximité de la partie cylindrique centrale (6) du rotor (5), immédiatement en amont dudit panneau (13) pour s'appuyer sur une partie radialement interne du bord supérieur des pales (8), **caractérisée en ce que** la pompe rotative comprend également une came auxiliaire (16) réalisée avec une seconde partie étroite avec une rampe descendante positionnée immédiatement en amont dudit panneau (13) en position radialement externe par rapport à ladite première partie de rampe descendante (11) de la came supérieure (10) et à proximité du bord latéral externe de la partie périphérique (7) du rotor pour mettre en prise une partie radialement externe du bord supérieur des pales (8) et coopérer avec ladite première partie de rampe descendante (11) de la came supérieure (10) pour provoquer un mouvement descendant symétrique des pales (8) au-dessous dudit panneau (13).

2. Pompe selon la revendication 1, **caractérisée en ce que** la première partie de rampe (11) de la came supérieure (10) est positionnée dans une position adjacente à une partie centrale cylindrique (12) de la came supérieure (10) positionnée autour de la partie centrale (6) du rotor (5).

3. Pompe selon la revendication 1 ou 2, **caractérisée en ce que** la came auxiliaire (16) est fixée sur le bord latéral externe de la came supérieure (10).
